# EUROPEAN PATENT SPECIFICATION

(11) **EP 2 355 307 B1**
(45) Date of publication and mention of the grant of the patent: **12.11.2014**
(21) Application number: 11250123.4
(22) Date of filing: 03.02.2011
(51) Int. Cl.: H02K 3/28, H02K 17/14

(54) **Multi-speed induction motor**
Induktionsmotor mit mehreren Drehzahlen
Moteur à induction à plusieurs vitesses

(30) Priority: 04.02.2010 US 700216
(43) Date of publication of application: 10.08.2011
(73) Proprietor: Hamilton Sundstrand Corporation, Windsor Locks, CT 06096-1010 (US)
(72) Inventor: Coldwate, Joseph Kenneth, Roscoe IL 61073 (US)
(74) Representative: Taylor, Adam David

(56) References cited:
- BE-A- 672 984
- FR-A- 1 394 721
- FR-A1- 2 272 514
- JP-A- 61 052 140

## Description

### BACKGROUND

The present invention is related to induction machines, and in particular to multispeed induction motors.

The speed of an induction machine is a function of the number of stator pole pairs and frequency of the alternating current (ac) input voltage supplied to the stator. By selectively varying the number of stator poles, the speed of the induction machine can be varied. This type of induction machine is commonly preferred to as a multi-speed or pole-change type motor. For example, a two-speed induction machine connected to drive a fan assembly may have a first, lower pole count stator winding and a second, higher pole count stator winding. The induction machine excites the higher pole count stator winding to provide low-speed operation and the lower pole count stator winding to provide high-speed operation.

FR 2272514 and JP 61-52140 both describe examples of induction motors having lower pole count windings and higher pole count windings where the lower pole count windings are located radially interior to the higher pole count windings.

### SUMMARY

The present invention provides a multi-speed induction motor comprising: a stator portion having a stator yoke and a plurality of stator teeth extending from the stator yoke, the plurality of stator teeth defining a plurality of slots open to its interior diameter; a high pole count stator winding wound through the slots defined by the plurality of stator teeth and located adjacent to the stator yoke; and a low pole count stator winding wound though the slots defined by the plurality of stator teeth and located radially interior to the high pole count stator winding, wherein the outer circumference of the low pole count stator winding is less than the outer circumference of the high pole count stator winding; wherein the axial length of the low pole count stator winding is greater than the axial length of the high pole count stator winding; and wherein an annular space is provided by the differences in respective circumferences and axial lengths of the low pole count stator winding and high pole count stator winding, characterised in that the annular space is utilized to make terminal connections for both the stator windings.

### BRIEF DESCRIPTION OF THE DRAWINGS

FIG. 1 is a circuit diagram of a two-speed induction motor according to an embodiment of the present invention.
FIG. 2 is an isometric view of a two-speed induction motor according to an embodiment of the present invention.
FIGS. 3A and 3B are cross-sectional and side views of a two-speed induction motor according to an embodiment of the present invention.
FIG. 4 is a diagrammatic sectional view of a two-speed induction motor according to an embodiment of the present invention.

### DETAILED DESCRIPTION

The present invention provides a light-weight, energy efficient multi-speed motor. The motor includes at least two stator windings (a low pole count winding and a high pole count winding) wound around a common stator core. A plurality of stator teeth extends radially inward from the stator core, thereby defining a plurality of slots open to its inner diameter. The high pole count winding is wound around the stator core first, such that the high pole count winding is located adjacent to a yoke portion of the stator core. The low-pole count winding is wound subsequently, such that it is radially interior to the high-pole count winding. The low-pole count winding is wound such that it has fewer poles than the high pole-count winding. Because of the decreased pole count, the low pole-count winding spans more slots than the high pole count winding. By locating the low pole count winding radially interior to the high pole count winding, the endturns associated with the low-pole count winding (i.e., the circumferential portion of the windings that extends from one slot to the next) are reduced in length. As a result of the reduced endturn length, the total length of wire comprising the low pole count winding is reduced, resulting in improved power efficiency (i.e., reduced I²R losses) and lower weight. In addition, the location of the low pole-count windings and high pole-count windings provides an unoccupied cylindrical volume that can be utilized for wire connections and terminals.

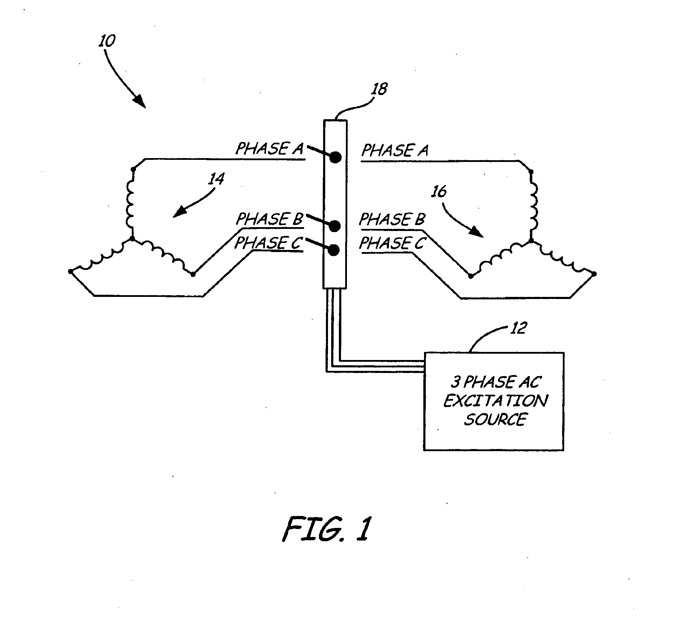

FIG. 1 is a circuit diagram of two-speed induction motor 10 according to an embodiment of the present invention. Two-speed induction motor 10 receives alternating current (ac) power from three-phase ac excitation source 12. Three-phase ac power is distributed through switching relay 18 to high pole count winding 14 or low pole count winding 16.

High pole count winding 14 and low pole-count winding 16 each include three windings connected in a wye-configuration to the respective phases of ac power (i.e., phase A, phase B, and phase C). The speed of induction motor 10 depends on the frequency of the ac power provided to the stator windings and the number of pole pairs. By selectively altering the number of pole pairs, induction motor 10 is capable of operating at two different speeds without requiring alteration of the ac power provided by excitation source 12. To operate two-speed induction motor 10 at a low-speed, switching relay 18 distributes power from excitation source 12 to high pole-count winding 14. During low-speed operation, no excitation is provided to low pole-count winding motor winding 16. To transition to high-speed operation, switching relay 18 is modified to distribute power from excitation source 12 to low pole-count winding 16. In one embodiment, low pole-count winding 16 would include two pole-pairs, while high pole-count winding 14 would include three pole-pairs.

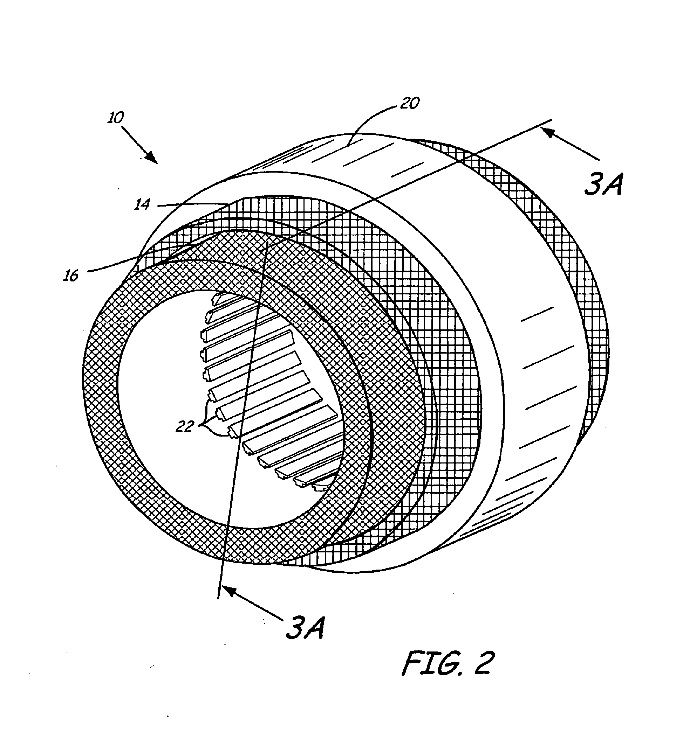

FIG. 2 is an isometric view of the stator portion of two-speed induction motor 10 according to an embodiment of the present invention. The rotor portion, not shown, would be located interior to and axially aligned with the stator portion. The stator core portion includes stator yoke (sometimes referred to as the back-iron) 20 and a plurality of stator teeth 22 extending radially inward from stator yoke 20. Stator teeth 22 define a plurality of slots for receiving high pole-count winding 14 and low pole-count winding 16. High pole-count winding 14 and low pole-count winding 16 are comprised of wire (e.g., copper) that is wound around stator teeth 22 to form the desired winding configuration. For the sake of simplicity, the isometric view of FIG. 2 does not illustrate the wire making up each winding. Rather, the location or space occupied by each winding is illustrated by the annular shapes labeled high pole-count winding 14 and low pole-count winding 16 (cross-hatched to distinguish the representation of the windings from the stator yoke 20).

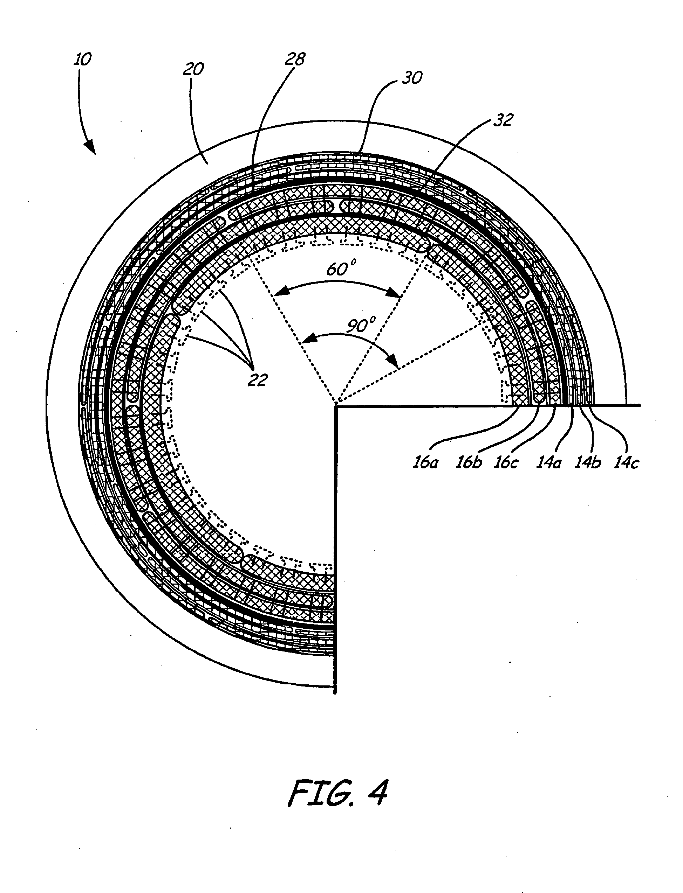

As shown in FIG. 2, high pole-count winding 14 are wound around stator teeth 22 such that winding 14 is adjacent to the interior surface of stator yoke 20. Low pole-count winding 16 is subsequently wound around stator teeth 22 such that winding 16 is located radially interior to high pole-count winding 14. Locating low pole-count winding 16 radially interior to high pole-count winding 14 improves the power efficiency and weight of two-speed induction motor 10. Power losses related to two-speed induction motor 10 are based, at least in part, on the overall resistance of each winding (i.e., I²R losses). The overall resistance of each winding is, in turn, related at least in part to the length of the windings. By reducing the overall length of the winding, the efficiency of the motor is improved. Because low pole-count winding 16 spans a greater number of stator teeth 22 than high pole-count winding 14 (shown in more detail with respect to FIG. 4), the lengths of the endturns associated with low pole-count winding 16 are greater than those of high pole-count winding 14 (assuming that both windings are located at the same radial distance from the axis). By locating low pole-count winding 16 radially interior to high pole-count winding 14, the circumference of the endturns associated with low pole-count winding 16 is reduced, thereby reducing the overall length of low pole count winding. The decreased length of wire reduces the weight of the motor as well as improves the power efficiency of the motor.

This optimization is especially effective for multispeed motors designed to drive a fan or pump impeller wherein the required motor torque varies by the square of the speed (i.e., 4 times the torque at twice the speed). Because of this load characteristic, the lower pole winding (i.e., the high-speed winding) is typically designed to draw higher current in order to produce the higher torque needed at the high-speed operating point. However, higher current draw necessitates the use of additional copper wire within the winding to manage the power. An embodiment of the present invention, which reduces the endturn length of the lower pole winding, reduces the overall length of copper wire required and therefore optimizes the weight and volume characteristics of the motor.

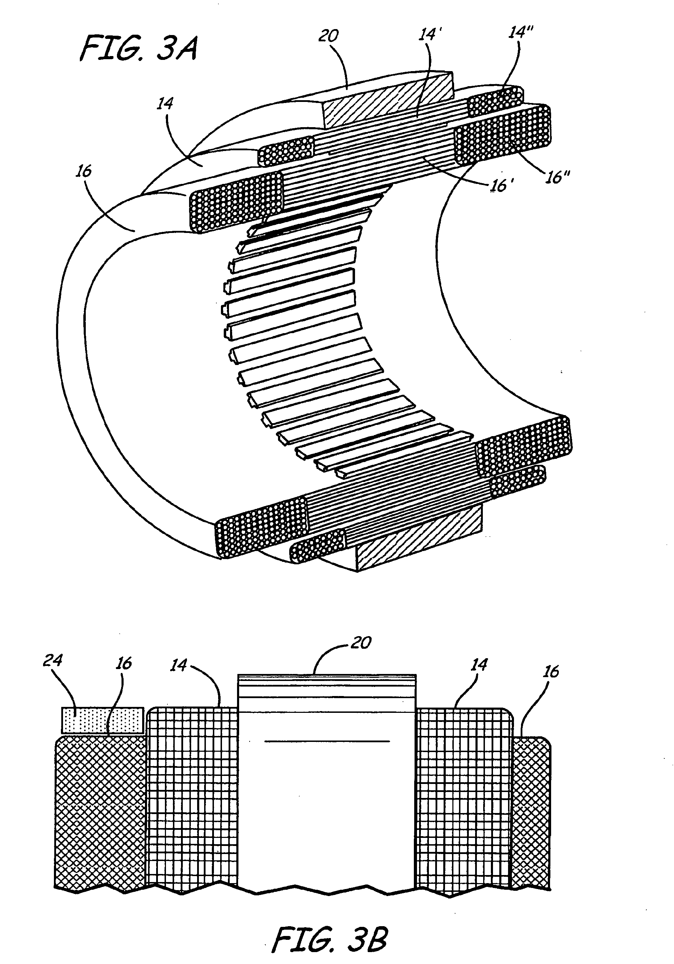

FIG. 3A is a cross-sectional schematic view of two-speed induction motor taken along line 3A-3A. Similar to FIG. 2, the cross-sectional view shown in FIG. 3A illustrates the locations of high pole count winding 14 and low pole count winding 16, stator yoke 20 and stator teeth 22. In addition, the cross-sectional view schematically illustrates various portions of each winding, including the axial portion located within the slots defined by the plurality of stator teeth 22 and the end-turn portions that circumferentially span stator teeth. For example, high pole count winding 14 includes axial slot portion 14' and endturn portion 14". Low pole count winding 16 similarly includes axial slot portion 16' and endturn portion 16". The axial slot portions of each winding extend between adjacent stator teeth to form a magnetic pole. The endturn portion of each winding extends circumferentially between stator slots. For example, the endturn portion of high pole count winding 14 may span six stator teeth 22, while the endturn portion of low pole count winding 16 may span nine stator teeth (the lower the pole count, the more teeth must be spanned by each endtum).

FIG. 3B is a side view illustrating the respective locations of high pole count windings 14, low pole-count windings 16, stator core 20, and cylindrical volume 24 available for terminals and connections associated with both stator windings. As shown in FIG. 3B, low pole-count winding 16, located radially interior to high pole-count winding 14, extends axially beyond the end of high pole-count windings 16. Resulting cylindrical volume 24 located around the outer circumference of low pole-count winding 16 provides a space for placing leadwires and connections for both sets of windings.

FIG. 4 is a diagrammatic sectional view of two-speed induction motor 10 that illustrates the respective lengths of endturns for high pole count winding 14 and low pole count winding 16, as well as the location of insulation layer 28 located between high pole count winding 14 and low pole count winding 16. Insulation layer 28 may be electrically insulative, thermally insulative, or both electrically/thermally insulative. Electric insulation between high pole count winding 14 and low pole count winding 16 prevents electrical shorts/faults in one winding from propagating into the adjacent winding.

In this view, both high pole count winding 14 and low pole count winding 16 are comprised of three individual phases. For example, high pole count winding 14 consists of three separate phase windings 14a, 14b, and 14c (collectively, high pole count winding 14). Likewise, low pole count winding 16 consists of three separate phase windings 16a, 16b, and 16c (collectively, low pole count winding 16). Each phase winding is wound in the slots defined by stator teeth 22. The circumferential cylinders illustrate the end turn length of each respective phase. For example, high pole count winding 14 is shown in a six pole configuration, in which endturn 30 associated with high pole count winding 14c spans six stator teeth (defined by the angle equal to 60°). Low pole count winding 16 is shown in a four pole configuration, in which endturn 32 associated with low pole count winding 16c spans nine stator teeth (defined by the angle equal to 90°). By locating low pole-count windings 16 radially interior to high pole-count windings 14, the length of wire required to form the endturns of low pole count winding 16 is reduced due to the smaller circumference. The greater number of slots spanned by low pole count winding 16 makes it more beneficial to place the low pole count winding interior to high pole count winding 14. In the embodiment shown in FIG. 4, for the sake of simplicity both winding sets are shown in a phase-down concentric distribution, however, in other embodiments various other distributions may be employed such as a lap-distribution.

The present invention therefore provides a multi-speed induction motor that improves efficiency and provides cylindrical space for making terminal connections. While the invention has been described with reference to an exemplary embodiment(s), it will be understood by those skilled in the art that various changes may be made and equivalents may be substituted for elements thereof without departing from the scope of the invention which is defined by the claims. For example, the present invention has been described with respect to a two-speed induction motor, but additional stator windings may be employed to develop a multi-speed induction motor. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A multi-speed induction motor (10) comprising:
a stator portion having a stator yoke (20) and a plurality of stator teeth (22) extending from the stator yoke, the plurality of stator teeth defining a plurality of slots open to its interior diameter;
a high pole count stator winding (14) wound through the slots defined by the plurality of stator teeth and located adjacent to the stator yoke; and
a low pole count stator winding (16) wound though the slots defined by the plurality of stator teeth and located radially interior to the high pole count stator winding,
wherein the outer circumference of the low pole count stator winding is less than the outer circumference of the high pole count stator winding;
wherein the axial length of the low pole count stator winding is greater than the axial length of the high pole count stator winding; and
wherein an annular space (24) is provided by the differences in respective circumferences and axial lengths of the low pole count stator winding and high pole count stator winding,
**characterised in that** the annular space is utilized to make terminal connections for both the stator windings.

2. The multi-speed induction motor of claim 1, the high pole count stator winding including endturns spanning a first number of stator teeth.

3. The multi-speed induction motor of claim 2, the low pole count stator winding including endturns spanning a second number of stator teeth greater than the first number of stator teeth.

4. The multi-speed induction motor of claim 3, wherein the end turns of the low pole count stator winding are radially interior to the endturns of the high pole count stator winding.

5. The multi-speed induction motor of any preceding claim, further including:
an insulative layer (28) located between the high pole count stator winding and the low pole count stator winding.

6. The multi-speed induction motor of any preceding claim, further comprising:
an interior rotor portion axially aligned with the stator portion.

7. The multi-speed inductor of any preceding claim, further comprising
a switching relay (18) connected to selectively distribute alternating current to either the high pole count stator winding or the low pole count stator winding.

8. The multi-speed induction motor of any preceding claim, wherein the high pole count stator winding includes three phase windings connected in a wye-configuration.

9. The multi-speed induction motor of any preceding claim, wherein the low pole count stator winding includes three phase windings connected in a wye-configuration.

10. The multi-speed inductor motor of any preceding claim wherein the multi-speed inductor motor is a two-speed inductor motor.

## Patentansprüche

1. Induktionsmotor mit mehreren Drehzahlen (10), umfassend:
einen Statorabschnitt mit einem Statorjoch (20) und einer Mehrzahl von Statorzähnen (22), die sich vom Statorjoch erstrecken, wobei die Mehrzahl von Statorzähnen eine Mehrzahl von Schlitzen definiert, die zu ihrem Innendurchmesser hin offen sind;
eine Statorwicklung mit hoher Polzahl (14), die durch die Schlitze gewickelt ist, die von der Mehrzahl von Statorzähnen definiert sind, und benachbart zu dem Statorjoch angeordnet ist; und
eine Statorwicklung mit niedriger Polzahl (16), die durch die Schlitze gewickelt ist, die von der Mehrzahl von Statorzähnen definiert sind, und radial innerhalb der Statorwicklung mit hoher Polzahl angeordnet ist,
wobei der Außenumfang der Statorwicklung mit niedriger Polzahl kleiner als der Außenumfang der Statorwicklung mit niedriger Polzahl ist;
wobei die Axiallänge der Statorwicklung mit niedriger Polzahl größer als die Axiallänge der Statorwicklung mit niedriger Polzahl ist; und
wobei durch die Differenzen des jeweiligen Durchmessers und der jeweiligen Axiallänge der Statorwicklung mit niedriger Polzahl und der Statorwicklung mit hoher Polzahl ein Ringraum (24) bereitgestellt wird,
**dadurch gekennzeichnet, dass** der Ringraum dazu benutzt wird, Anschlussverbindungen für beide Statorwicklungen herzustellen.

2. Induktionsmotor mit mehreren Drehzahlen nach Anspruch 1, wobei die Statorwicklung mit hoher Polzahl Endwindungen aufweist, die sich über eine erste Anzahl von Statorzähnen erstrecken.

3. Induktionsmotor mit mehreren Drehzahlen nach Anspruch 2, wobei die Statorwicklung mit niedriger Polzahl Endwindungen aufweist, die sich über eine zweite Anzahl von Statorzähnen erstrecken, welche höher als die erste Anzahl von Statorzähnen ist.

4. Induktionsmotor mit mehreren Drehzahlen nach Anspruch 3, wobei die Endwindungen der Statorwicklung mit niedriger Polzahl radial innerhalb der Endwindungen der Statorwicklung mit hoher Polzahl sind.

5. Induktionsmotor mit mehreren Drehzahlen nach einem der vorangehenden Ansprüche, ferner aufweisend:
eine Isolationsschicht (28), die zwischen der Statorwicklung mit hoher Polzahl und der Statorwicklung mit niedriger Polzahl angeordnet ist.

6. Induktionsmotor mit mehreren Drehzahlen nach einem der vorangehenden Ansprüche, ferner umfassend:
einen Innenrotorabschnitt, der axial am Statorabschnitt ausgerichtet ist.

7. Induktionsmotor mit mehreren Drehzahlen nach einem der vorangehenden Ansprüche, ferner umfassend:
ein Schaltrelais (18), das dazu verbunden ist, selektiv Wechselstrom an die Statorwicklung mit hoher Polzahl oder an die Statorwicklung mit niedriger Polzahl zu verteilen.

8. Induktionsmotor mit mehreren Drehzahlen nach einem der vorangehenden Ansprüche,
wobei die Statorwicklung mit hoher Polzahl drei Phasenwicklungen aufweist, die in einer Sternschaltung verbunden sind.

9. Induktionsmotor mit mehreren Drehzahlen nach einem der vorangehenden Ansprüche,
wobei die Statorwicklung mit niedriger Polzahl drei Phasenwicklungen aufweist, die in einer Sternschaltung verbunden sind.

10. Induktionsmotor mit mehreren Drehzahlen nach einem der vorangehenden Ansprüche,
wobei der Induktionsmotor mit mehreren Drehzahlen ein Induktionsmotor mit zwei Drehzahlen ist.

## Revendications

1. Moteur à induction à vitesses multiples (10) comprenant :
une partie formant un stator comportant un bâti de stator (20) ; et un ensemble de dents de stator (22) s'étendant à partir du bâti de stator, la pluralité de dents de stator définissant une pluralité de fentes ouvertes vers son diamètre intérieur ;
un enroulement de stator à compte élevé de pôles (14), enroulé à travers les fentes définies par la pluralité de dents de stator et situé à côté du bâti de stator ; et
un enroulement de stator à compte réduit de pôles (16), enroulé à travers les fentes définies par la pluralité de dents de stator et situé radialement à l'intérieur de l'enroulement de stator à compte élevé de pôles,
la circonférence extérieure de l'enroulement de stator à compte réduit de pôles étant inférieure à la circonférence extérieure de l'enroulement de stator à compte élevé de pôles ;
la longueur axiale de l'enroulement de stator à compte réduit de pôles étant supérieure à la longueur axiale de l'enroulement de stator à compte élevé de pôles ; et
un espace annulaire (24) étant obtenu grâce aux différences entre les circonférences respectives et les longueurs axiales de l'enroulement de stator à compte réduit de pôles et de l'enroulement de stator à compte élevé de pôles,
**caractérisé en ce que** l'espace annulaire est utilisé pour établir des connexions de bornes pour les deux enroulements de stator.

2. Moteur à induction à vitesses multiples selon la revendication 1, l'enroulement de stator à compte élevé de pôles comprenant des tours d'extrémité comprenant un premier nombre de dents de stator.

3. Moteur à induction à vitesses multiples selon la revendication 2, l'enroulement de stator à compte réduit de pôles comprenant des tours d'extrémité comprenant un deuxième nombre de dents de stator supérieur au premier nombre de dents de stator.

4. Moteur à induction à vitesses multiples selon la revendication 3, dans lequel les tours d'extrémité de l'enroulement de stator à compte réduit de pôles sont radialement intérieurs aux tours d'extrémité de l'enroulement de stator à compte élevé de pôles.

5. Moteur à induction à vitesses multiples selon l'une quelconque des revendications précédentes, comprenant en outre :
une couche isolante (28) située entre l'enroulement de stator à compte élevé de pôles et l'enroulement de stator à compte réduit de pôles.

6. Moteur à induction à vitesses multiples selon l'une quelconque des revendications précédentes, comprenant en outre une partie intérieure formant le rotor, alignée axialement avec la partie formant le stator.

7. Moteur à induction à vitesses multiples selon l'une quelconque des revendications précédentes, comprenant en outre un relais de commutation (18) connecté pour distribuer de manière sélective un courant alternatif à l'un ou l'autre de l'enroulement de stator à compte élevé de pôles ou de l'enroulement de stator à compte réduit de pôles.

8. Moteur à induction à vitesses multiples selon l'une quelconque des revendications précédentes, dans lequel l'enroulement de stator à compte élevé de pôles comprend des enroulements triphasés branchés selon une configuration en étoile.

9. Moteur à induction à vitesses multiples selon l'une quelconque des revendications précédentes, dans lequel l'enroulement de stator à compte réduit de pôles comprend des enroulements triphasés branchés en étoile.

10. Moteur à induction à vitesses multiples selon l'une quelconque des revendications précédentes, dans lequel le moteur à induction à vitesses multiples est un moteur à induction à deux vitesses.
